# EUROPÄISCHE PATENTANMELDUNG

(11) **EP 3 705 843 A1**
(43) Veröffentlichungstag der Anmeldung: **09.09.2020**
(21) Anmeldenummer: 19161324.9
(22) Anmeldetag: 07.03.2019
(51) Int. Cl.: G01B 11/26, G01B 11/02

(54) **OPTISCHES ERMITTELN EINER ORIENTIERUNG EINES OBJEKTS**

(71) Anmelder: Siemens Aktiengesellschaft, 80333 München (DE)
(72) Erfinder: Feiten, Wendelin, 85579 Neubiberg (DE)

(57) **Zusammenfassung**

Es wird eine Anordnung (10, 10a, 10b) zur Ermittlung der Orientierung und/oder Position eines Objekts (1, 1a) beschrieben. Die Anordnung (10, 10a, 10b) weist das Objekt (1, 1a) auf. Das Objekt (1, 1a) hat eine reflektierende Oberfläche, deren Flächennormale ortsabhängig mindestens derart variiert, dass eine Änderung der Orientierung und/oder Position des Objekts (1, 1a) um einen vorbestimmten Winkel und/oder eine Änderung der Position des Objekts (1) um eine vorgegebene Verschiebung eine Positionsänderung eines an der reflektierenden Oberfläche reflektierten Abbilds (4', 4a', 4b', 4c', 4d') einer stationären Punktlichtquelle (4, 4a, 4b, 4c, 4d) auf einer Sensorfläche (5) einer stationären optischen Sensoreinheit (5) bewirkt, welche größer als die Auflösung der Sensorfläche (5a) ist. Teil der Anordnung (10, 10a, 10b) sind auch die stationäre Punktlichtquelle (4, 4a, 4b, 4c, 4d) zum Beleuchten des Objekts (1, 1a) und die stationäre optische Sensoreinheit (5) mit einer Sensorfläche (5a) zum Erfassen eines Abbilds (4', 4a', 4b', 4c', 4d') der Punktlichtquelle (4, 4a, 4b, 4c, 4d). Die Anordnung (10, 10a, 10b) umfasst auch eine Auswertungseinheit (6) zum Ermitteln einer Orientierung und/oder Position des Objekts (1, 1a) in Abhängigkeit von dem detektierten Abbild (4', 4a', 4b', 4c', 4d') der Punktlichtquelle (4, 4a, 4b, 4c, 4d) und einer vorbekannten ortsabhängigen Variation der Flächennormalen der reflektierenden Oberfläche des Objekts (1, 1a). Es wird auch ein Ermittlungsverfahren beschrieben. Überdies wird ein automatisiertes Handhabungssystem (90) beschrieben.

## Beschreibung

Die Erfindung betrifft eine Anordnung zur Ermittlung der Orientierung und/oder Position eines Objekts. Weiterhin betrifft die Erfindung ein Ermittlungsverfahren. Überdies betrifft die Erfindung ein automatisiertes Handhabungssystem.

Bei der Herstellung von Produkten sowie bei vielen Dienstleistungen werden heute bereits automatisierte Systeme, wie zum Beispiel Roboter, eingesetzt. Roboter müssen dabei oft die Aufgabe erfüllen, Gegenstände, seien es Werkzeuge oder Werkstücke, zu ergreifen und zu handhaben. Für die Handhabung ist es jedoch in der Regel erforderlich, die Position und Orientierung des zu handhabenden Objekts relativ zu dem Handhabungsgerät, beispielsweise ein Arm eines Roboters, genau zu kennen. Dabei kann die erforderliche Genauigkeit im Rahmen einiger weniger Millimeter oder Grad liegen.

Die Position und Orientierung des Objekts kann durch eine Fixierung festgelegt sein. Allerdings ist eine solche Vorgehensweise mit einem hohen Einrichtungsaufwand verbunden und eine solche Handhabung ist unflexibel.

Zur Bestimmung von Position und Orientierung werden häufig Sensorsysteme eingesetzt. Diese Sensorsysteme arbeiten in der Regel mit Kameras, manche auch mit direkt tiefenmessenden Verfahren wie Laserentfernungssensoren, manche mit Stereobildaufnahme, entweder auf Basis von mehreren Kameras oder auf der Basis von in die Szene projiziertem strukturiertem Licht oder mit Kombinationen dieser Ansätze.

Die Messung der Orientierung eines Objekts hängt bei diesen Verfahren davon ab, dass entweder Strukturen des Objekts bei unterschiedlicher räumlicher Tiefe wahrgenommen werden können oder dass die Tiefenmessung sehr genau ist. Eine genaue Tiefenmessung ist aber bei diesen Verfahren mit hohen Kosten verbunden. Außerdem sind bei Objekten die räumlich weiter entfernt liegenden Merkmale oft schlecht sichtbar, zum Beispiel weil sie durch andere Objekte verdeckt sind oder weil sie im Schatten liegen. Wenn aber von einem Objekt nur eine vordere Fläche sichtbar ist, ist die Messung der Orientierung oft ungenau.

Es besteht mithin das Problem, eine Anordnung zur Ermittlung einer Orientierung und/oder Position eines Objekts anzugeben, welche mit geringerem Aufwand eine genaue Bestimmung der Position und/oder Orientierung des Objekts ermöglichen.

Diese Aufgabe wird durch eine Anordnung zur Ermittlung der Orientierung und/oder Position eines Objekts gemäß Patentanspruch 1, ein Ermittlungsverfahren gemäß Patentanspruch 14 und ein automatisiertes Handhabungssystem gemäß Patentanspruch 15 gelöst.

Die erfindungsgemäße Anordnung zur Ermittlung der Orientierung und/oder Position eines Objekts weist das Objekt auf, welches eine reflektierende Oberfläche umfasst. Als reflektierende Oberfläche soll eine Oberfläche verstanden werden, welche einfallendes Licht, d.h. Infrarotlicht, UV-Licht oder optisch sichtbares Licht zurückwirft. Die Flächennormale der reflektierenden Oberfläche soll dabei ortsabhängig mindestens derart variieren, dass eine Änderung der Orientierung und/oder Position des Objekts um einen vorbestimmten Winkel und/oder eine Änderung der Position des Objekts um eine vorgegebene Verschiebung eine Positionsänderung eines an der reflektierenden Oberfläche reflektierten Abbilds einer stationären Punktlichtquelle auf einer Sensorfläche einer stationären optischen Sensoreinheit bewirkt, welche größer als die Auflösung der Sensorfläche ist. Anders ausgedrückt, wird die Oberfläche des Objekts derart strukturiert, dass eine vorbestimmte minimale Änderung der Position oder Orientierung des Objekts eine detektierbare Änderung der Position des Abbildes des Objekts auf der Sensorfläche der stationären optischen Sensoreinheit bewirkt. Hierzu kann insbesondere die Neigung der Oberfläche ortsabhängig genügend variieren, um eine ausreichende winkelabhängige Auflösung zu erreichen.

Teil der erfindungsgemäßen Anordnung ist auch die stationäre Punktlichtquelle zum Beleuchten des Objekts. Wie im Folgenden noch erläutert wird, soll die Anzahl der Punktlichtquellen nicht auf eine einzige beschränkt sein, sondern es sollen auch Ausführungsbeispiele umfasst sein, bei denen mehrere Punktlichtquellen vorhanden sind. Die erfindungsgemäße Anordnung umfasst auch die stationäre optische Sensoreinheit mit einer Sensorfläche zum Erfassen eines Abbilds der Punktlichtquelle. Auch hierzu ist anzumerken, die Verwendung des unbestimmten Artikels keine Einschränkung hinsichtlich der Anzahl der Sensoreinheiten zur Erfassung des reflektierten Lichts bedeuten soll.

Zudem weist die erfindungsgemäße Anordnung eine Auswertungseinheit zum Ermitteln einer Orientierung und/oder Position des Objekts in Abhängigkeit von dem detektierten Abbild der Punktlichtquelle und einer vorbekannten ortsabhängigen Variation der Flächennormalen der reflektierenden Oberfläche des Objekts auf. D.h. es lässt sich auf Basis der bekannten Topographie der Oberfläche des Objekts ein mathematischer Zusammenhang zwischen einer Position und/ oder Orientierung eines Objekts und einer Position von einer oder mehreren abgebildeten Punktlichtquellen auf der Sensorfläche der Sensoreinheit vorbestimmen, auf dessen Basis und unter Kenntnis des genannten Abbilds der Punktlichtquelle auf der Sensorfläche der Sensoreinheit die Orientierung und/oder Position des Objekts berechenbar ist. Die Konstruktion und Herstellung einer derart strukturierten Oberfläche eines Objekts lässt sich leicht bewerkstelligen. Wenn zum Beispiel ein solches Objekt im Spritzgussverfahren hergestellt werden soll, so muss nur einmalig die Form für den Spritzguss geändert werden. Danach muss für jedes gefertigte Bauteil kein zusätzlicher Aufwand erfolgen. Außerdem ist der Zusammenhang zwischen der Position und/oder Orientierung des Objekts und dem Ort der Reflektion des Lichts der Punktlichtquelle an eine Anforderung an die Genauigkeit der Positions- und/oder Orientierungsmessung anpassbar. Vorteilhaft können spezifische Genauigkeitsanforderungen bei möglichst geringem Kostenaufwand erfüllt werden.

Bei dem erfindungsgemäßen Ermittlungsverfahren erfolgt ein Ausbilden eines Objekts mit einer reflektierenden Oberfläche, deren Flächennormale ortsabhängig mindestens derart variiert, dass eine Änderung der Orientierung und/oder Position des Objekts um einen vorbestimmten Winkel und/oder eine Änderung der Position des Objekts um eine vorgegebene Verschiebung eine Positionsänderung eines an der reflektierenden Oberfläche reflektierten Abbilds einer stationären Punktlichtquelle auf einer Sensorfläche einer stationären optischen Sensoreinheit bewirkt, welche größer als die Auflösung der Sensorfläche ist. Das Objekt wird mit der stationären Punktlichtquelle beleuchtet, das Licht der Punktlichtquelle wird an der Oberfläche entsprechend seinem Einfallswinkel zur Flächennormale reflektiert und es wird ein Abbild der stationären Punktlichtquelle durch die stationäre optische Sensoreinheit erfasst. Bei dem erfindungsgemäßen Ermittlungsverfahren erfolgt auch ein Ermitteln einer Orientierung und/oder Position des Objekts in Abhängigkeit von dem detektierten Abbild der Punktlichtquelle und einer vorbekannten ortsabhängigen Variation der Flächennormalen der reflektierenden Oberfläche des Objekts. Das erfindungsgemäße Ermittlungsverfahren teilt die Vorteile der Anordnung zur Ermittlung der Orientierung und/oder Position eines Objekts.

Das erfindungsgemäße automatisierte Handhabungssystem weist eine erfindungsgemäße Anordnung zur Ermittlung der Orientierung und/oder Position eines Objekts auf. Teil des erfindungsgemäßen automatisierten Handhabungssystems ist auch ein Roboter zum Handhaben des Objekts. Überdies umfasst das erfindungsgemäße automatisierte Handhabungssystem auch eine Steuereinrichtung zum Ansteuern des Roboters zur Handhabung des Objekts. Die Steuereinrichtung ist dazu eingerichtet, auf Basis einer durch das erfindungsgemäße Ermittlungsverfahren ermittelten Orientierung und/oder Position des Objekts eine Bewegung des Roboters zur Handhabung des Objekts zu steuern. Das erfindungsgemäße automatisierte Handhabungssystem teilt die Vorteile der Anordnung zur Ermittlung der Orientierung und/oder Position eines Objekts.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung der erfindungsgemäßen Anordnung zur Ermittlung der Orientierung und/oder Position eines Objekts ist die reflektierende Oberfläche als Linse ausgebildet. Eine Linse hat üblicherweise in Abhängigkeit vom Ort unterschiedlich orientierte Normalen und kann daher als Reflektor für die erfindungsgemäße Anordnung genutzt werden. Die Krümmung der Linse hängt von den Anforderungen an die Auflösung der Orientierung und Position des Objekts ab.

Bevorzugt ist die Linse als Fresnellinse ausgebildet, die eine Mehrzahl von Ringelementen mit unterschiedlicher Neigung der Oberfläche aufweist. Eine Fresnellinse umfasst eine Mehrzahl von unterschiedlich geneigten Ringelementen. Wird Licht von einem Ringelement mit einer bestimmten Neigung reflektiert, so kann auf die Neigung des Objekts geschlossen werden, auf dessen Oberfläche die Fresnellinse angeordnet ist.

Besonders bevorzugt ist die Fresnellinse als konkave Fresnellinse ausgebildet. Wenn sich die Mitte dieser Linse in der optischen Achse befindet, dann ist der Abstand des Abbildes einer Punktlichtquelle von der Bildmitte proportional zum Neigungswinkel der Ringelemente. Den Proportionalitätsfaktor und damit den Bereich der Abbildung kann man vorab an die Anforderungen der Handhabung anpassen. Die Neigung der Ringelemente kann auch eine nichtlineare Relation zu dem Abstand zur optischen Achse der Fresnellinse aufweisen. Beispielsweise kann mit einem solchen nichtlinearen Verlauf eine genauere Abbildung in der Mitte zu Lasten einer weniger genauen Abbildung am Rand der Fresnellinse erreicht werden.

Die Fresnellinse kann rotationssymmetrisch zur optischen Achse ausgebildet sein. Sie kann aber auch rotationsunsymmetrisch zur optischen Achse ausgebildet sein. Wenn der Reflektor rotationsunsymmetrisch ist, dann enthalten die abgebildeten Lichtpunkte auch eine Information über die Rotation des Objekts um die optische Achse.

In einer bevorzugten Ausgestaltung der erfindungsgemäßen Anordnung zur Ermittlung der Orientierung und/oder Position eines Objekts ist die Variation der Neigung der Oberfläche der Ringelemente derart ausgebildet, dass der Abstand des Abbilds der Punktlichtquelle von der Mitte der Sensorfläche proportional zu der Neigung der Oberfläche des Objekts ist. Bei dieser Variante ist die Genauigkeit der Ermittlung der Orientierung und/oder Position des Objekts über den gesamten Abbildungsbereich unverändert.

In einer Ausgestaltung der erfindungsgemäßen Anordnung zur Ermittlung der Orientierung und/oder Position eines Objekts ist die Variation der Neigung der Oberfläche der Ringelemente derart ausgebildet, dass der Abstand des Abbilds der Punktlichtquelle von der Mitte der Sensorfläche für kleine Neigungswinkel der Oberfläche des Objekts stärker mit der Neigung der Oberfläche des Objekts variiert als für größere Neigungswinkel. Wie bereits erwähnt, kann damit eine genauere Abbildung in der Mitte zu Lasten einer weniger genauen Abbildung am Rand der Fresnellinse erreicht werden.

In einer Variante der erfindungsgemäßen Anordnung zur Ermittlung der Orientierung und/oder Position eines Objekts befindet sich eine vorzugsweise diffus streuende Markierung, welche von der optischen Sensoreinheit als Referenzpunkt detektierbar ist, auf der Oberfläche des Objekts. Vorteilhaft kann eine Entfernung eines abgebildeten Lichtpunkts von der optischen Achse der Fresnellinse bzw. des Reflektors leicht ermittelt werden.

Die erfindungsgemäße Anordnung zur Ermittlung der Orientierung und/oder Position eines Objekts kann auch eine Mehrzahl von stationären Punktlichtquellen aufweisen. Eine Mehrzahl von abgebildeten Lichtpunkten auf der Sensorfläche der optischen Sensoreinheit kann zum Beispiel zur Positionsermittlung des Objekts im Raum genutzt werden.

In einer alternativen Variante der erfindungsgemäßen Anordnung zur Ermittlung der Orientierung und/oder Position eines Objekts umfasst die reflektierende Oberfläche Punktmerkmale und Normalenmerkmale. Die Punktmerkmale streuen Licht nach allen Richtungen, während die Normalenmerkmale Licht nur in einer Richtung, nämlich in einem Winkel relativ zur Normalen, welcher dem Winkel zwischen der Einfallsrichtung und der Normalen entspricht (Winkel der Einfallsrichtung = Winkel der Ausfallrichtung) reflektieren.

In einer Ausgestaltung der erfindungsgemäßen Anordnung zur Ermittlung der Orientierung und/oder Position eines Objekts sind die Punktmerkmale unterscheidbar, aber die Normalenmerkmale sind nicht unterscheidbar.

Bei dieser Ausgestaltung wird von M Punktmerkmalen ein Bild aufgenommen. Diese Bild wird in M Bilder aufgespalten, von denen das m-te Bild nur noch das m-te Punktmerkmal enthält. Für jede Beleuchtung mit einer einzelnen Punktlichtquelle Lₗ von L unterschiedlichen Lichtquellen wird ebenfalls ein Bild aufgenommen. Die Gesamtheit der M+L Bilder ist dann charakteristisch für die Position und Orientierung des Objekts im Raum. Dabei sind m, M und l, L ganze Zahlen und m < M, l < L. Vorteilhaft müssen bei dieser Variante relative wenige Teilbilder erzeugt werden, so dass der Datenverarbeitungsaufwand nicht so groß ist.

In einer alternativen Ausgestaltung der erfindungsgemäßen Anordnung zur Ermittlung der Orientierung und/oder Position eines Objekts sind die Punktmerkmale unterscheidbar und auch die Normalenmerkmale sind unterscheidbar.

Bei dieser Ausgestaltung wird von den M Punktmerkmalen ein gemeinsames Bild aufgenommen. Dieses Bild wird in M Bilder aufgespalten, von denen das m-te Bild nur noch das m-te Punktmerkmal enthält. Für jede Beleuchtung mit einer einzelnen Lichtquelle von L unterschiedlichen Lichtquellen und jedes Normalenmerkmal von N unterschiedlichen Normalenmerkmalen wird ebenfalls ein Bild aufgenommen (N ist eine ganze Zahl). Die Gesamtheit der M+L*N Bilder sind dann charakteristisch für die Position und Orientierung des Objekts im Raum. Bei dieser Variante ist die Anzahl der Teilbilder größer, dafür ergibt sich eine hohe Redundanz und damit Zuverlässigkeit der Anordnung im Hinblick auf die Positions- und Orientierungsbestimmung des betreffenden Objekts.

Für die beschriebenen alternativen Anordnungen lässt sich ein künstliches neuronales Netz trainieren, wobei hierzu ein Trainingsdatensatz aus bekannten Bildern und bekannten Positionen bzw. Orientierungen eines Objekts dazu genutzt wird, das künstliche neuronale Netz anzupassen. Anschließend kann dann das so trainierte künstliche neuronale Netz auf Bilddaten des Objekts angewandt werden, zu denen die Position und Orientierung des Objekts noch nicht bekannt ist. Mit Hilfe des trainierten neuronalen Netzes lässt sich dann eine gesuchte Position und/oder Orientierung des Objekts anhand der aufgenommenen Bilddaten ermitteln.

Die Erfindung wird im Folgenden unter Hinweis auf die beigefügten Figuren anhand von Ausführungsbeispielen noch einmal näher erläutert. Es zeigen:
- FIG 1: eine schematische Darstellung einer Anordnung zur Ermittlung einer Orientierung und/oder Position eines Objekts gemäß einem Ausführungsbeispiel der Erfindung,
- FIG 2: eine schematische Darstellung der in FIG 1 gezeigten Anordnung zur Ermittlung einer Orientierung und/oder Position eines Objekts mit einer geänderten Orientierung des Objekts,
- FIG 3: eine schematische Darstellung der in FIG 1 und FIG 2 gezeigten Anordnung zur Ermittlung einer Orientierung und/oder Position eines Objekts mit einer dritten Orientierung des Objekts,
- FIG 4: eine schematische Darstellung einer Anordnung zur Ermittlung einer Orientierung und/oder Position eines Objekts gemäß einem Ausführungsbeispiel der Erfindung mit einer Mehrzahl von Punktlichtquellen,
- FIG 5: eine schematische Darstellung eines Abbilds von vier Punktquellen,
- FIG 6: eine schematische Darstellung einer punktsymmetrischen Fresnellinse,
- FIG 7: eine schematische Darstellung einer unsymmetrischen Fresnellinse,
- FIG 8: ein Flussdiagramm, welches ein Ermittlungsverfahren gemäß einem Ausführungsbeispiel der Erfindung veranschaulicht,
- FIG 9: eine schematische Darstellung eines automatisierten Handhabungssystems gemäß einem Ausführungsbeispiel der Erfindung,
- FIG 10: eine schematische Darstellung einer Anordnung zur Ermittlung einer Orientierung und/oder Position eines Objekts gemäß einem alternativen Ausführungsbeispiel der Erfindung,
- FIG 11: eine schematische Darstellung der in FIG 10 gezeigten Anordnung mit einer Verschiebung des Objekts in x-Richtung,
- FIG 12: eine schematische Darstellung der in FIG 10 und FIG 11 gezeigten Anordnung mit einer Rotation des Objekts um die y-Achse,
- FIG 13: eine schematische Darstellung der in FIG 10 bis FIG 12 gezeigten Anordnung mit einer Verschiebung des Objekts in Richtung der z-Achse,
- FIG 14: eine schematische Darstellung eines Trainingsverfahrens eines künstlichen neuronalen Netzes, mit dem die Ermittlung einer Orientierung und/oder Position eines Objekts mit der in FIG 10 bis FIG 13 gezeigten Anordnung trainiert werden kann.

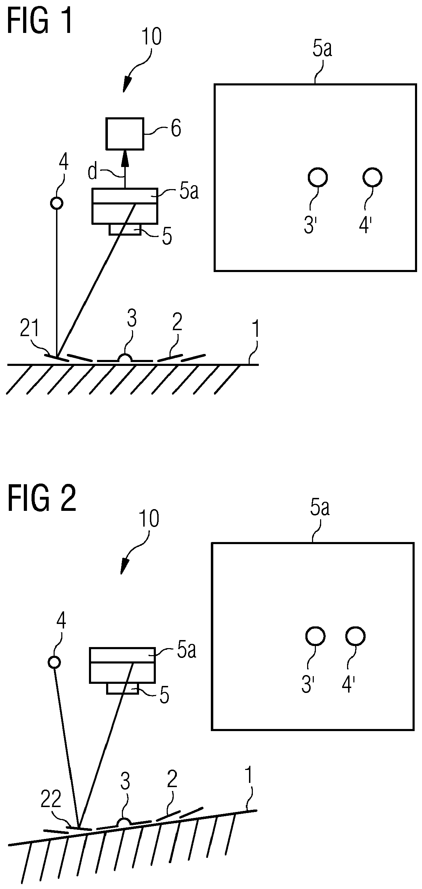

In FIG 1 ist eine Anordnung 10 zur Ermittlung einer Orientierung eines Objekts 1 im Querschnitt dargestellt. Das Objekt 1 selbst ist in FIG 1 im unteren Teilbereich gestrichelt dargestellt. Die Anordnung 10 weist eine Fresnellinse 2 auf einer Oberfläche des Objekts 1 auf. Die Fresnellinse 2 ist in FIG 1 durch unterschiedlich geneigte Striche veranschaulicht, die jeweils einen konzentrischen Ring mit unterschiedlicher Neigung symbolisieren. Die Neigung der Ringe der Fresnellinse 2 nehmen zum Zentrum hin ab. Im Zentrum der Fresnellinse befindet sich eine halbkugelförmige Markierung 3, welche eine Art Referenzmarke 3 darstellt. Die Anordnung 10 umfasst außerdem eine punktförmige Lichtquelle 4, mit der die Oberfläche des Objekts 1 angestrahlt wird. Das Licht von der punktförmigen Lichtquelle 4, welches in FIG 1 als gerader Strich symbolisiert ist, wird von einem ersten äußeren Ring 21 der Fresnellinse 2 reflektiert und von einer Kamera 5 erfasst, welche eine Rezeptionsfläche 5a aufweist. Im rechten Teil von FIG 1 ist diese Rezeptionsfläche 5a vergrößert dargestellt. Darauf ist ein Abbild 3' der Referenzmarke 3 in der Mitte zu erkennen und rechts daneben ein Abbild 4' der punktförmigen Lichtquelle zu erkennen. In FIG 1 ist auch eine Auswertungseinheit 6 gezeigt, welche dazu eingerichtet ist, eine Orientierung und/oder Position des Objekts 1 in Abhängigkeit von dem detektierten Abbild 4' der Punktlichtquelle 4 zu ermitteln. Dazu ermittelt die Auswertungseinheit den Abstand d zwischen dem Mittelpunkt 3' und der Position des Abbilds 4' der Punktlichtquelle 4. Weiterhin wird dann von der Auswertungseinheit 6 auf Basis einer bekannten Relation zwischen dem Abstand d des Bildpunkts 4'und der Neigung des Objekts 1 eine aktuelle Neigung des Objekts 1 berechnet.

In FIG 2 ist die bereits in FIG 1 gezeigte Anordnung 10 gezeigt, wobei das Objekt 1 um einen Winkel verkippt ist, so dass eine Orientierung der Oberfläche des Objekts 1, welche der Kamera 5 und der punktförmigen Lichtquelle 4 zugewandt ist, unterschiedlich zu der in FIG 1 gezeigten Orientierung ist. Aus diesem Grund wird nun das Licht der punktförmigen Lichtquelle 4 von einem zweiten, weiter innen liegenden Ring 22 der Fresnellinse 2 an eine andere Stelle der Rezeptionsfläche 5a der Kamera 5 reflektiert. Wie in FIG 2 in der linken Teilzeichnung zu erkennen ist, befindet sich das Abbild 4' der punktförmigen Lichtquelle 4 näher bei dem weiterhin in der Mitte der Rezeptionsfläche 5a angeordneten Abbild 3' der Referenzmarke 3.

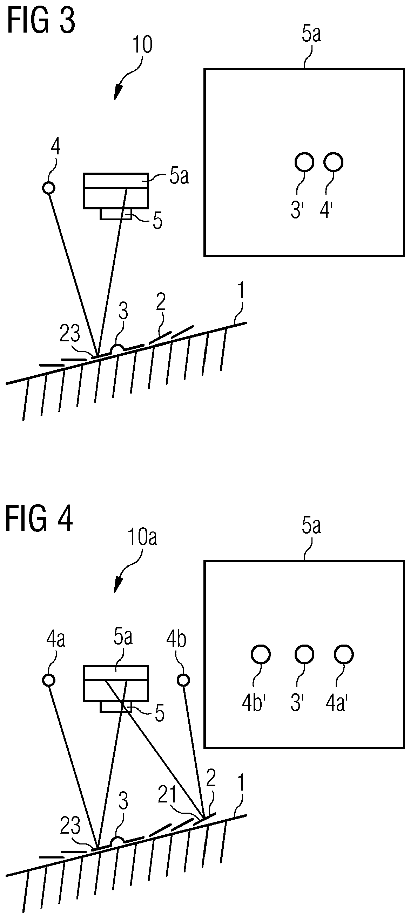

In FIG 3 ist die in FIG 1 und FIG 2 gezeigte Anordnung mit einer noch stärkeren Neigung des Objekts 1 bzw. dessen der punktförmigen Lichtquelle 4 und der Kamera 5 zugewandten Oberfläche gezeigt. Die noch stärkere Neigung des Objekts 1 bewirkt eine Reflexion durch einen dritten inneren, der Referenzmarkierung 3 benachbarten Ring 23 der Fresnellinse 2. Wie in FIG 3 in der linken Teilzeichnung zu erkennen ist, befindet sich das Abbild 4' der punktförmigen Lichtquelle 4 noch näher bei dem weiterhin in der Mitte der Rezeptionsfläche 5a angeordneten Abbild 3' der Referenzmarke 3 als in FIG 2.

In FIG 4 ist eine Anordnung 10a zur Ermittlung einer Orientierung eines Objekts 1 mit zwei punktförmigen Lichtquellen 4a, 4b dargestellt. Das Licht einer ersten punktförmigen Lichtquelle 4a, welche sich in FIG 4 links neben der Kamera 5 befindet, wird von einem inneren Ring 23 der Fresnellinse 2 auf einen Punkt 4a' rechts von dem Abbild 3' der Referenzmarke 3 reflektiert und das Licht einer zweiten Lichtquelle 4b, welche sich in FIG 4 rechts neben der Kamera 5 befindet, wird von einem äußeren Ring 21 der Fresnellinse 2 auf einen links von dem Abbild 3' der Referenzmarke 3 befindlichen Punkt 4b' reflektiert, der allerdings weiter entfernt von dem Abbild 3' der Referenzmarke 3 liegt als das Abbild 4a' der ersten punktförmigen Lichtquelle. Die Verwendung einer Mehrzahl von Punktlichtquellen 4a, 4b erlaubt es, zusätzlich zu der Information über die Orientierung des Objekts 1 auch Informationen bezüglich der Position des Objekts 1 zu gewinnen.

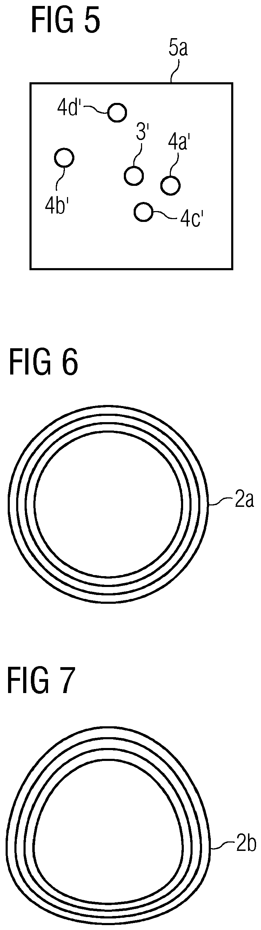

In FIG 5 ist eine Darstellung von Abbildern 4a', 4b', 4c', 4d' von vier punktförmigen Lichtquellen 4a, 4b, 4c, 4d einer Anordnung mit vier punktförmigen Lichtquellen dargestellt. Die Abbilder 4a', 4b', 4c', 4d' liegen auf der Rezeptionsfläche 5a der Kamera 5 verstreut um das Bild 3' der Referenzmarke. Aus den Positionen der Abbilder 4a', 4b', 4c', 4d' kann eine Position eines Objekts und dessen Orientierung ermittelt werden.

In FIG 6 ist eine rotationssymmetrische Fresnellinse 2a gezeigt. Die rotationssymmetrische Fresnellinse 2a weist konzentrisch angeordnete Ringelemente auf, wie sie bei der Anordnung in FIG 1 bis FIG 3 zum Einsatz kommt.

In FIG 7 ist eine Fresnellinse 2b mit Vorzugsrichtung gezeigt. Ist der Reflektor, d.h. die Fresnellinse nicht rotationssymmetrisch, so enthalten die Lichtpunkte auch Informationen über die Rotation des Objekts um die Hochachse bzw. die optische Achse der Fresnellinse 2b.

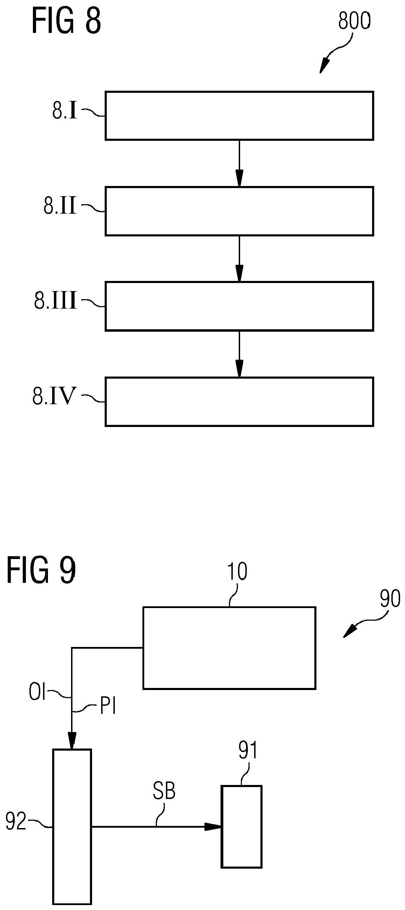

In FIG 8 ist ein Flussdiagramm gezeigt, welches ein Ermittlungsverfahren gemäß einem Ausführungsbeispiel der Erfindung veranschaulicht. Bei dem Schritt 8.I wird ein Objekt mit einer reflektierenden Oberfläche ausgebildet. Die Oberfläche des Objekts weist eine Flächennormale auf, die ortsabhängig mindestens derart variiert, dass eine Änderung der Orientierung und/oder Position des Objekts um einen vorbestimmten Winkel und/oder eine Änderung der Position des Objekts um eine vorgegebene Verschiebung eine Positionsänderung eines an der reflektierenden Oberfläche reflektierten Abbilds einer stationären Punktlichtquelle auf einer Sensorfläche einer stationären optischen Sensoreinheit bewirkt, welche größer als die Auflösung der Sensorfläche ist.

Bei dem Schritt 8.II wird das Objekt mit Hilfe der stationären Punktlichtquelle beleuchtet. Das Licht der stationären Punktlichtquelle wird an der strukturierten Oberfläche des Objekts reflektiert und bei dem Schritt 8. III wird ein Abbild der stationären Punktlichtquelle durch die stationäre optische Sensoreinheit erfasst. Bei dem Schritt 8.IV wird schließlich eine Orientierung und/oder Position des Objekts in Abhängigkeit von dem detektierten Abbild der Punktlichtquelle und einer vorbekannten ortsabhängigen Variation der Flächennormalen der reflektierenden Oberfläche des Objekts ermittelt.

In FIG 9 ist ein automatisiertes Handhabungssystem 90 gemäß einem Ausführungsbeispiel der Erfindung veranschaulicht. Das automatisierte Handhabungssystem 90 weist eine Anordnung 10 zur Ermittlung der Orientierung und/oder Position eines Objekts, wie sie in FIG 1 veranschaulicht ist, auf. Weiterhin weist das automatisierte Handhabungssystem 90 auch einen Roboter 91 zum Handhaben des Objekts auf. Teil des automatisierten Handhabungssystems 90 ist auch eine Steuereinrichtung 92 zum Ansteuern des Roboters 91 zur Handhabung des Objekts mit Hilfe von Steuerbefehlen SB. Die Steuereinrichtung 92 ist dazu eingerichtet, auf Basis einer durch das in FIG 8 veranschaulichte Verfahren ermittelten Orientierungsinformation OI und/oder Positionsinformation PI des Objekts eine Bewegung des Roboters 91 zur Handhabung des Objekts zu steuern.

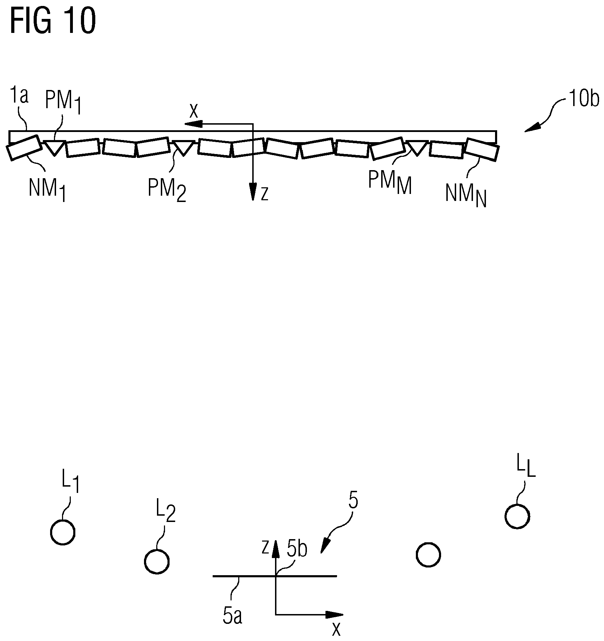

In FIG 10 ist eine schematische Darstellung einer Anordnung 10b zur Ermittlung einer Orientierung und/oder Position eines Objekts 1a gemäß einem alternativen Ausführungsbeispiel der Erfindung dargestellt. Die Anordnung 10b weist eine Kamera 5 auf, die im unteren Teil von FIG 10 mittig dargestellt ist und nur durch eine waagrechte, gerade Linie symbolisiert ist. Diese Linie symbolisiert eine Bildaufnahmefläche 5a dieser Kamera 5. Die Bildaufnahmefläche 5a umfasst ein Bildzentrum 5b. Die Anordnung 10b weist außerdem ein Objekt 1a auf, welches eine Mehrzahl von Punktmerkmalen PM₁, ..., PM_{M} sowie eine Mehrzahl von Normalenmerkmalen NM₁, ..., NM_{N} auf seiner Oberfläche aufweist. Weiterhin umfasst die Anordnung 10a eine Mehrzahl von Punktlichtquellen L₁, ..., L_{L} (in FIG 10 ist L = 4), welche dem Objekt gegenüberliegend positioniert sind. Die Fläche bzw. Oberfläche des Objekts 1a, welche die genannten Merkmale PM₁, ..., PM_{M}, NM₁, ..., NM_{N} umfasst, liegt in der x-y-Ebene. In FIG 10 ist eine zweidimensionale Vereinfachung oder Querschnittsansicht der Anordnung 1a gezeigt, wobei in y-Richtung auf die Anordnung 1a geblickt wird.

Die in FIG 10 gezeigte Anordnung 10b lässt sich jedoch auch als dreidimensionale Anordnung realisieren, wobei zusätzlich zur x-Richtung auch in y-Richtung Normalenmerkmale und Punktmerkmale angeordnet sind. Die Punktmerkmale PM₁, ..., PM_{M} sind in FIG 10 als Dreiecke symbolisiert. Die Punktmerkmale PM₁, ..., PM_{M} können so ausgeführt werden, dass sie voneinander unterscheidbar sind. Dieser Effekt lässt sich durch eine unterscheidbare, charakteristische äußere Form der Punktmerkmale PM₁, ..., PM_{M} erreichen. Die Punktmerkmale PM₁, ..., PM_{M} reflektieren Licht in alle Richtungen. Die Normalenmerkmale NM₁, ..., NM_{N} sind in FIG 10 als Rechtecke symbolisiert. Die Normalenmerkmale NM₁, ..., NM_{N} weisen jeweils eine ebene Oberfläche auf, deren Normalen jedoch in verschiedene Richtungen zeigen. Wo gegebenenfalls die Normalenmerkmale NM₁, ..., NM_{N} im Bild erscheinen, hängt von der Beleuchtung durch die Punktlichtquellen L₁, ..., L_{L} ab, sowie von der Richtung der jeweiligen Normalen der Normalenmerkmale NM₁, ..., NM_{N}.

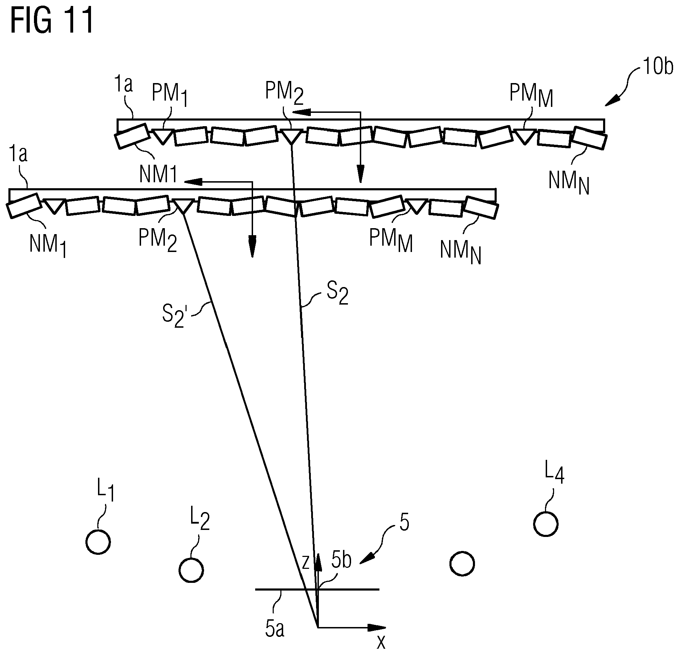

In FIG 11 ist eine schematische Darstellung der in FIG 10 gezeigten Anordnung 10b zur Ermittlung einer Orientierung und/oder Position eines Objekts 1a mit einer Verschiebung des Objekts 1a in x-Richtung veranschaulicht. Hierzu ist das Objekt 1a in einer Ausgangsposition, d.h. einer unverschobenen Position und zusätzlich etwas nach links in x-Richtung verschoben dargestellt. In der unverschobenen Position des Objekts 1a, trifft das von dem Punktmerkmal PM₂ reflektierte Licht S₂ nahe bei dem Bildzentrum 5b auf die Bildaufnahmefläche 5a der Kamera 5. Ganz anders trifft bei einer Verschiebung des Objekts 1a das von dem Punktmerkmal PM₂ reflektierte Licht S₂' weiter entfernt vom Zentrum 5b auf die Bildaufnahmefläche 5a, so dass eine Verschiebung des Objekts 1a in x-Richtung durch eine Positionsänderung des Punktmerkmals PM₂ auf der Bildaufnahmefläche 5a detektiert werden kann.

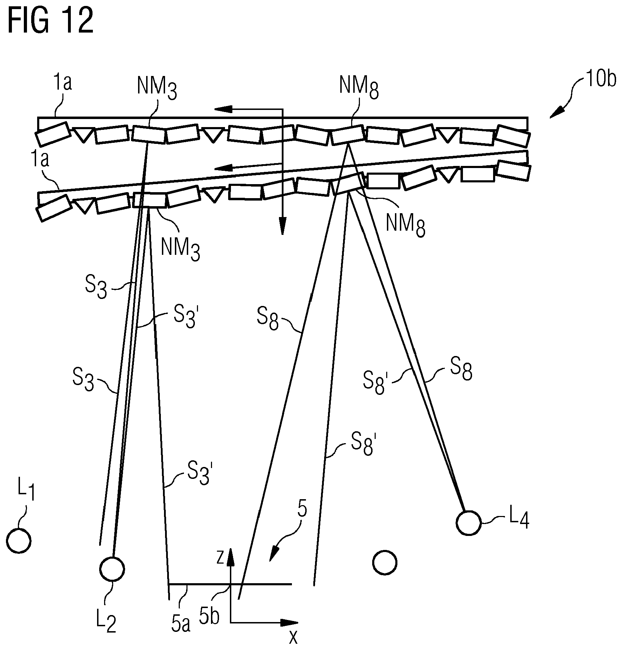

In FIG 12 ist eine schematische Darstellung der in FIG 10 und FIG 11 gezeigten Anordnung 10b mit einer Rotation des Objekts 1a um die y-Achse (die y-Achse liegt senkrecht zur Blattebene) veranschaulicht. Eine solche Rotation lässt sich mit Hilfe einer Beleuchtung des Objekts 1a mit mehreren Lichtquellen L₂, L₄ und einer Reflektion des Lichts S₃, S₈ an den Normalenmerkmalen NM₃, NM₈ ermitteln. Im Gegensatz zu den Punktmerkmalen hängt das Abbild bzw. die Position des Abbilds der Normalenmerkmale NM₃, NM₈ von der Beleuchtungsrichtung ab. Aufgrund der unterschiedlichen Normalenrichtungen ist die Änderung der Positionen der Abbilder der Normalenmerkmale NM₃, NM₈ auf der Bildaufnahmefläche 5a durch die Rotation des Objekts 1a sehr ausgeprägt. Bei Beleuchtung durch die Punktlichtquelle L₂ wird durch das Normalenmerkmal NM₃ im Ausgangszustand, also im nicht rotierten Zustand des Objekts 1a, kein Abbild auf der Bildaufnahmefläche 5a der Kamera 5 erzeugt, da der Lichtstrahl S₃ von dem Normalenmerkmal NM₃ in einen Bereich außerhalb dieser Bildaufnahmefläche 5a reflektiert wird, d.h., der an dem Normalenmerkmal NM₃ reflektierte Lichtstrahl S₃ schneidet nicht die Bildaufnahmefläche 5a. Dagegen erfolgt im rotierten Zustand eine Reflektion des Lichtstrahls S₃' auf die Bildaufnahmefläche 5a der Kamera 5, d.h., der von dem Normalenmerkmal NM₃ reflektierte Strahl S₃' trifft die Bildaufnahmefläche 5a. Das Normalenmerkmal NM₈ wird im nicht rotierten Zustand durch das Licht S₈ der Punktlichtquelle L₄ auf die Bildaufnahmefläche 5a reflektiert. Hingegen wird das Normalenmerkmal NM₈ im rotierten Zustand des Objekts 1a nicht auf die Bildaufnahmefläche 5a der Kamera 5 reflektiert. D.h., der Lichtstrahl S₈' wird auf einen Bereich außerhalb der Bildaufnahmefläche 5a reflektiert. Es ist auch möglich, die reflektierenden Flächen der Normalenmerkmale individuell zu gestalten, um anhand der Form des Abbilds zu erkennen, welches der Normalenmerkmale abgebildet wird. Mithin kann die Rotation des Objekts 1a in Abhängigkeit davon ermittelt werden, welches der Normalenmerkmale an welcher Stelle der Bildaufnahmefläche 5a abgebildet wird.

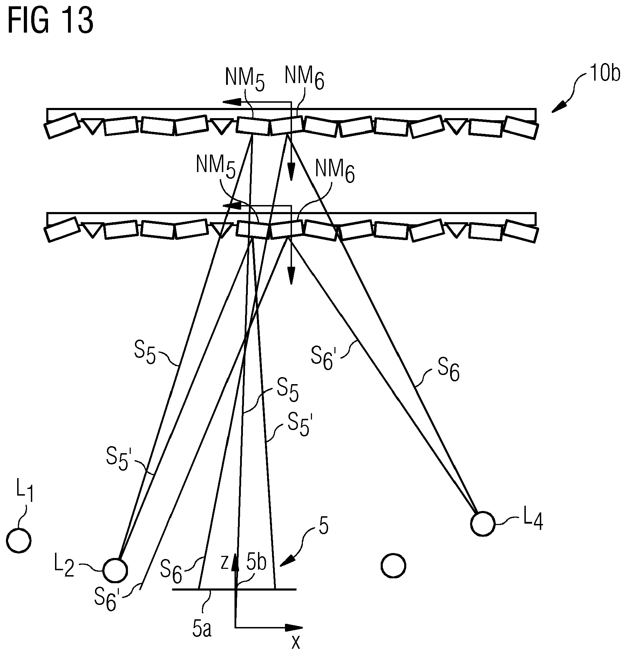

In FIG 13 ist eine schematische Darstellung der in FIG 10 bis FIG 12 gezeigten Anordnung 10b mit einer Verschiebung des Objekts 1a in Richtung der z-Achse veranschaulicht. Aufgrund der unterschiedlichen Ausrichtung der Normalen der Normalenmerkmale NM₅, NM₆ ist die durch die Verschiebung in z-Richtung verursachte Änderung auf der Abbildungsfläche 5a stark ausgeprägt, so dass eine Verschiebung des Objekts 1a in z-Richtung leicht detektierbar ist. Im unverschobenen Zustand wird die Punktlichtquelle L₂ von dem Normalenmerkmal NM₅ mit den Lichtstrahlen S₅, auf das Zentrum 5b der Aufnahmefläche 5a abgebildet. Weiterhin wird das Normalenmerkmal NM₆ im unverschobenen Zustand durch die Lichtstrahlen S₆, von der Punktlichtquelle L₄ auf die Bildaufnahmefläche 5a abgebildet. Im verschobenen Zustand wird von dem Normalenmerkmal NM₅ ein Abbild der Punktlichtquelle L₂ durch Lichtstrahlen S₅' erzeugt. Das Abbild liegt nun nicht mehr im Zentrum 5b der Bildaufnahmefläche 5a, sondern weiter rechts außen. Das Normalenmerkmal NM₆ wird im verschobenen Zustand durch die Lichtstrahlen S₆' der Punktlichtquelle L₄ im Gegensatz zu dem unverschobenen Zustand nicht mehr auf die Bildaufnahmefläche 5a reflektiert.

Mithin kann eine Verschiebung des Objekts 1a in z-Richtung mit Hilfe der Normalenmerkmale und mehrerer Lichtquellen L₂, L₄ detektiert werden.

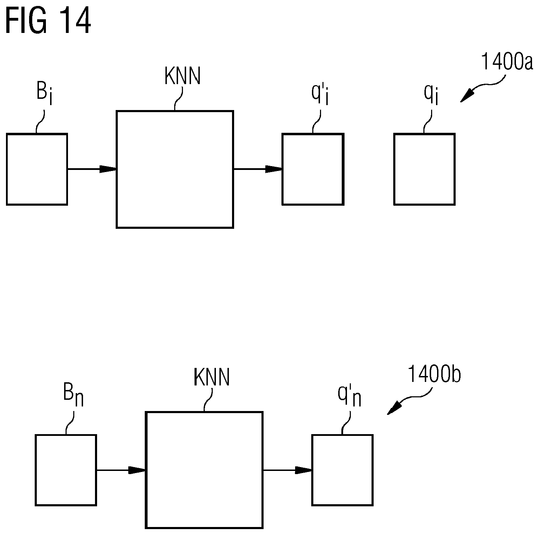

In FIG 14 ist eine schematische Darstellung eines Trainingsverfahrens 1400a eines künstlichen neuronalen Netzes KNN, mit dem die Ermittlung einer Orientierung und/oder Position eines Objekts 1a mit der in FIG 10 bis FIG 13 gezeigten Anordnung 10b trainiert werden kann, veranschaulicht. Hierzu wird das Objekt 1a in bekannte Positionen und Orientierungen qᵢ gebracht und für jede dieser Positionen und Orientierungen werden Bilder Bᵢ von dem Objekt 1a mit den bekannten Positionen und Orientierungen qᵢ aufgenommen. Diese Bilder Bᵢ ergeben einen Trainingsdatensatz, d.h. ein Datensatz, welcher einen Datensatzes B von Bildern Bᵢ und einen Datensatz q von Positionen und Orientierungen qᵢ des Objekts 1a aufweist. Die Gewichte des neuronalen Netzes KNN werden im Rahmen der Trainingsphase so eingestellt, dass für den Trainingsdatensatz B, q die Summe der Abweichungen der vom künstlichen neuronalen Netz KNN berechneten Positionen und Orientierungen qᵢ' von den tatsächlichen Positionen und Orientierung qᵢ minimiert wird. Dieser Trainingsvorgang ist in dem oberen Teilbild von FIG 14 veranschaulicht.

Mit dem so trainierten künstlichen neuronalen Netz lässt sich dann in einem Anwendungsvorgang 1400b aus einem Satz von bisher nicht trainierten Bildern Bₙ die entsprechende Position und Orientierung qₙ' des Objekts 1a berechnen. Dieser Vorgang ist in dem unteren Teilbild von FIG 14 veranschaulicht.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Anordnung (10, 10a, 10b) zur Ermittlung der Orientierung und/oder Position eines Objekts (1, 1a), aufweisend:
- das Objekt (1, 1a) mit einer reflektierenden Oberfläche, deren Flächennormale ortsabhängig mindestens derart variiert, dass eine Änderung der Orientierung und/oder Position des Objekts (1, 1a) um einen vorbestimmten Winkel und/oder eine Änderung der Position des Objekts (1, 1a) um eine vorgegebene Verschiebung eine Positionsänderung eines an der reflektierenden Oberfläche reflektierten Abbilds (4', 4a', 4b', 4c', 4d') einer stationären Punktlichtquelle (4, 4a, 4b, 4c, 4d) auf einer Sensorfläche (5a) einer stationären optischen Sensoreinheit (5) bewirkt, welche größer als eine Auflösung der Sensorfläche (5a) ist,
- die stationäre Punktlichtquelle (4, 4a, 4b, 4c, 4d) zum Beleuchten des Objekts (1, 1a),
- die stationäre optische Sensoreinheit (5) mit einer Sensorfläche (5a) zum Erfassen eines Abbilds (4', 4a', 4b', 4c', 4d') der Punktlichtquelle (4, 4a, 4b, 4c, 4d),
- eine Auswertungseinheit (6) zum Ermitteln einer Orientierung und/oder Position des Objekts (1, 1a) in Abhängigkeit von dem detektierten Abbild (4', 4a', 4b', 4c', 4d') der Punktlichtquelle (4, 4a, 4b, 4c, 4d) und einer vorbekannten ortsabhängigen Variation der Flächennormalen der reflektierenden Oberfläche des Objekts (1, 1a).

2. Anordnung nach Anspruch 1, wobei die reflektierende Oberfläche als Linse ausgebildet ist.

3. Anordnung nach Anspruch 2, wobei die Linse als Fresnellinse (2) ausgebildet ist, die eine Mehrzahl von Ringelementen (21, 22, 23) mit unterschiedlicher Neigung der Oberfläche aufweist.

4. Anordnung nach Anspruch 3, wobei die Fresnellinse (2) als konkave Fresnellinse ausgebildet ist.

5. Anordnung nach Anspruch 4, wobei die Variation der Neigung der Oberflächen der Ringelemente (22, 23, 24) derart ausgebildet ist, dass der Abstand des Abbilds (4', 4a', 4b', 4c', 4d') der Punktlichtquelle (4, 4a, 4b, 4c, 4d) von der Mitte der Sensorfläche (5a) proportional zu der Neigung der Oberfläche des Objekts (1) ist

6. Anordnung nach Anspruch 4, wobei die Variation der Neigung der Oberflächen der Ringelemente (21, 22, 23) derart ausgebildet ist, dass der Abstand des Abbilds (4', 4a', 4b', 4c', 4d') der Punktlichtquelle (4, 4a, 4b, 4c, 4d) von der Mitte (5b) der Sensorfläche für kleine Neigungswinkel der Oberfläche des Objekts (1) stärker mit der Neigung der Oberfläche des Objekts (1) variiert als für größere Neigungswinkel.

7. Anordnung nach einem der vorstehenden Ansprüche, aufweisend eine Markierung (3) auf der Oberfläche des Objekts (1), welche von der optischen Sensoreinheit (5) als Referenzpunkt detektierbar ist.

8. Anordnung nach einem der vorstehenden Ansprüche, aufweisend eine Mehrzahl von stationären Punktlichtquellen (4a, 4b, 4c, 4d).

9. Anordnung nach einem der Ansprüche 3 bis 8, wobei die Fresnellinse (2) rotationssymmetrisch zur optischen Achse ausgebildet ist.

10. Anordnung nach einem der Ansprüche 3 bis 8, wobei die Fresnellinse (2) rotationsunsymmetrisch zur optischen Achse ausgebildet ist.

11. Anordnung nach Anspruch 1, wobei die reflektierende Oberfläche Punktmerkmale (PM₁, ..., PM_{M}) und Normalenmerkmale (NM₁, ..., NM_{N}) umfasst.

12. Anordnung nach Anspruch 11, wobei die Punktmerkmale (PM₁, ..., PM_{M}) unterscheidbar sind und die Normalenmerkmale (NM₁, ..., NM_{N}) nicht unterscheidbar sind.

13. Anordnung nach Anspruch 11, wobei die Punktmerkmale (PM₁, ..., PM_{M}) und die Normalenmerkmale (NM₁, ..., NM_{N}) unterscheidbar sind.

14. Ermittlungsverfahren, aufweisend die Schritte:
- Ausbilden eines Objekts (1, 1a) mit einer reflektierenden Oberfläche, deren Flächennormale ortsabhängig mindestens derart variiert, dass eine Änderung der Orientierung und/oder Position des Objekts (1, 1a) um einen vorbestimmten Winkel und/oder eine Änderung der Position des Objekts (1, 1a) um eine vorgegebene Verschiebung eine Positionsänderung eines an der reflektierenden Oberfläche reflektierten Abbilds (4', 4a', 4b', 4c', 4d') einer stationären Punktlichtquelle (4, 4a, 4b, 4c, 4d) auf einer Sensorfläche (5a) einer stationären optischen Sensoreinheit (5) bewirkt, welche größer als die Auflösung der Sensorfläche (5a) ist,
- Beleuchten des Objekts (1, 1a) mit der stationären Punktlichtquelle (4, 4a, 4b, 4c, 4d),
- Erfassen eines Abbildes (4', 4a', 4b', 4c', 4d') der stationären Punktlichtquelle (4, 4a, 4b, 4c, 4d) durch die stationäre optische Sensoreinheit (5),
- Ermitteln einer Orientierung und/oder Position des Objekts (1, 1a) in Abhängigkeit von dem detektierten Abbild (4', 4a', 4b', 4c', 4d') der Punktlichtquelle (4, 4a, 4b, 4c, 4d) und einer vorbekannten ortsabhängigen Variation der Flächennormalen der reflektierenden Oberfläche des Objekts (1) .

15. Automatisiertes Handhabungssystem (90), aufweisend:
- eine Anordnung (10) nach einem der vorstehenden Ansprüche,
- einen Roboter (91) zum Handhaben des Objekts (1, 1a),
- eine Steuereinrichtung (92) zum Ansteuern des Roboters (91) zur Handhabung des Objekts (1, 1a), welche dazu eingerichtet ist, auf Basis einer durch das Ermittlungsverfahren gemäß Anspruch 11 ermittelten Orientierung und/oder Position des Objekts (1, 1a) eine Bewegung des Roboters (91) zur Handhabung des Objekts (1, 1a) zu steuern.
